# EUROPÄISCHE PATENTANMELDUNG

(11) **EP 1 889 680 A1**
(43) Veröffentlichungstag der Anmeldung: **20.02.2008**
(21) Anmeldenummer: 06017092.5
(22) Anmeldetag: 16.08.2006
(51) Int. Cl.: B23K 9/167, B23K 9/04, F01D 5/00, F01D 5/18, B23P 6/04, B23K 10/02, B23K 37/06

(54) **Verfahren zum Schweissen von Turbinenbauteilen unter Verwendung eines in einem Hohlraum des Bauteiles eingeführten keramischen Kerns**

(71) Anmelder: SIEMENS AKTIENGESELLSCHAFT, 80333 München (DE)
(72) Erfinder: Grohnert, Martin, 16552 Schildow (DE); Ladru, Francis-Jurjen, Dr., 10629 Berlin (DE); Reich, Gerhard, 10717 Berlin (DE)

(57) **Zusammenfassung**

Es wird ein Verfahren zum Schweißen von Turbinenbauteilen (1) mit wenigstens einem Hohlraum (9-17) sowie einer an den Hohlraum (9-17) angrenzenden Bauteilwand (23) zur Verfügung gestellt. Das Schweißen findet an einer Schweißstelle (19,21) in der Bauteilwand (23) statt. Vor dem schweißen wird ein keramischer Kern (25) wenigstens dort in den Hohlraum (9) eingeführt, wo sich die Schweißstelle (19,21) in der Bauteilwand (23) befindet. Nach dem Schweißen wird der keramische Kern (25) wieder entfernt.

## Beschreibung

Die vorliegende Erfindung betrifft ein Verfahren zum Schweißen von Turbinenbauteilen mit wenigstens einem Hohlraum sowie einer an den Hohlraum angrenzenden Bauteilwand wobei das Schweißen an einer Schweißstelle in der Bauteilwand stattfindet.

Gasturbinenbauteile wie etwa Turbinenschaufeln werden in Betrieb Bedingungen ausgesetzt, die zum Verschleiß der Bauteiloberfläche durch Korrosion und/oder Oxidation führen. In folge dessen können in den Bauteilen Risse, Abplatzungen, etc. auftreten. Um derartige Schäden zu minimieren, sind Turbinenschaufeln heutzutage in der Regel aus hochwarmfesten Superlegierungen auf Nickel- oder Kobaltbasis hergestellt. Das Herstellen der Bauteile aus derartigen Legierungen ist jedoch teuer, so dass man bestrebt ist, diese Bauteile mittels eines Weideraufarbeitungsprozesses (so genanntes "refurbishment") wieder für einen erneuten Einsatz herzurichten. Ziel ist es, den Anteil an Turbinenbauteilen, die auf Grund von Verschleiß zu Ausschuss erklärt werden müssen, zu minimieren.

Das Wiederaufarbeiten von beschädigten Stellen erfolgt in der Regel mittels Löt- oder Schweißverfahren. Schweißverfahren können jedoch bis heute nicht in allen Bereichen von Turbinenbauteilen eingesetzt werden, da der mit dem Schweißen verbundene Wärmeeintrag zu Verformungen im Bereich dünner Bauteilwände führen kann. Dies betrifft insbesondere solche Turbinenbauteile, die Hohlräume aufweisen, die bspw. dazu dienen, ein Kühlfluid durch das Bauteil strömen zu lassen. Bei hohlgegossenen Turbinenschaufeln werden daher bis jetzt bei an Hohlräumen angrenzenden Bauteilwänden keine Schweißverfahren im Rahmen der Wiederaufarbeitung durchgeführt. Turbinenbauteile mit Beschädigungen in Wänden, die an Hohlräume angrenzen, werden daher bis jetzt zu Ausschuss erklärt.

Aufgabe der vorliegenden Erfindung ist es daher, ein Verfahren zum Schweißen von Turbinenbauteilen mit wenigstens einem Hohlraum sowie einer an den Hohlraum angrenzenden Bauteilwand zur Verfügung zu stellen, wobei das Schweißen an einer Schweißstelle in einer an den Hohlraum angrenzenden Stelle der Bauteilwand stattfinden soll.

Diese Aufgabe wird durch das Verfahren nach Anspruch 1 gelöst. Die abhängigen Ansprüche enthalten vorteilhafte Ausgestaltungen des Verfahrens.

Im erfindungsgemäßen Verfahren zum Schweißen von Turbinenbauteilen mit wenigstens einem Hohlraum sowie einer an den Hohlraum angrenzenden Bauteilwand findet das Schweißen an einer Schweißstelle in der Bauteilwand statt, wo die Bauteilwand an den Hohlraum angrenzt. Vor dem Schweißen wird ein keramischer Kern wenigstens dort in den Hohlraum eingeführt, wo sich die Schweißstelle in der Bauteilwand befindet. Nach dem Schweißen wird der keramische Kern wieder entfernt.

Das Einbringen des keramischen Kerns in den Hohlraum zumindest dort wo sich die Schweißstelle in der angrenzenden Bauteilwand befindet, verhindert einer Verformung der Wand, selbst dann, wenn diese relativ dünn sein sollte. Der keramische Kern ist hierbei hitzebeständig und kann mit relativ einfachen Mitteln nach dem Schweißen wieder entfernt werden.

Als keramischer Kern kann insbesondere ein vorgeformter und an den Hohlraum im Bereich der zu Schweißenden Stelle angepasster formstabiler Einsatz Verwendung finden. Der formstabile Einsatz kann ein Grünling, also ein ausgehärtetes aber noch nicht gebranntes Keramikelement sein. Statt des Grünlings kann aber auch ein bereits gebranntes Keramikelement Verwendung finden. Diese Ausgestaltung bietet insbesondere die Möglichkeit, als keramischen Kern einen keramischen Gusskern zu verwenden, wie er auch beim Herstellen von Bauteilen wie dem zu reparierenden Turbinenbauteil Verwendung findet. Statt eines kompletten keramischen Gusskerns kann auch lediglich ein Teil des Gusskerns, nämlich derjenige Teil, welcher dem Hohlraum im Bereich der zu reparierenden Stelle entspricht, Verwendung finden. In diesem Fall können aus einem keramischen Gusskern eine Vielzahl von keramischen Kernen für den Schweißprozess hergestellt werden.

Statt eines formstabilen Einsatzes kann aber auch eine pastöse Masse als keramischer Kern in den Hohlraum eingebracht werden. Dies ermöglicht insbesondere dort den Einsatz von Keramikkernen beim Schweißen, wo auf Grund der Geometrie des Hohlraumes oder seiner Abmessungen das Einbringen eines festen Kerns nur schwer oder gar nicht möglich ist. Dies kann insbesondere im Blattbereich von Turbinenschaufeln der Fall sein.

Bei Verwendung von Grünlingen als Keramikkernen oder von pastöser Keramikmasse erfolgt vorzugsweise ein Brennen des Grünlings bzw. der pastösen Keramikmasse nach dem Einbringen in den Hohlraum und vor dem Durchführen des Schweißprozesses.

Das Entfernen des keramischen Kernes nach dem Durchführen des Schweißprozesses kann insbesondere durch Auslaugen, also durch Auflösen des Kerns in einem Lösungsmittel, erfolgen. Die Verwendung geeigneter Lösungsmittel ermöglicht es somit, den Kern aus Hohlräumen zu entfernen, ohne das Turbinenbauteil in Mitleidenschaft zu ziehen. Ein geeignetes Lösungsmittel ist bspw. Flusssäure (HF), welche selektiv das Keramikmaterial auflöst, aber das Bauteilmaterial nicht angreift. Neben der Flusssäure sind aber auch andere das Keramikmaterial auflösende und dabei das Bauteilmaterial nicht angreifende Lösungsmittel grundsätzlich geeignet.

Im erfindungsgemäßen Verfahren kann der zu schweißenden Stelle beim Schweißen ein artgleicher Werkstoff zugeführt werden. Dies ist insbesondere dann von Vorteil, wenn Wandstärke im Bereich der zu schweißenden Stelle wieder aufgebaut werden soll. Aber auch beim Reparieren von Rissen ist das Zuführen artgleichen Materials von Vorteil, da auch dort häufig korrodiertes Material ersetzt werden muss.

Als Schweißverfahren können insbesondere so genannte WIG-Schweißverfahren, also Wolfram-Inertgas-Schweißverfahren, oder Plasma-Pulver-Schweißverfahren zum Einsatz kommen.

Das erfindungsgemäße Verfahren eignet sich insbesondere für die Anwendung im Rahmen eines Wiederaufarbeitungsprozesses für Turbinenbauteile, wie etwa Turbinenlaufschaufeln oder Turbinenleitschaufeln.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Figur 1 zeigt in perspektivischer Ansicht eine Laufschaufel oder Leitschaufel einer Strömungsmaschine.

Figur 2 zeigt einen Schnitt durch ein betriebsbeanspruchtes Schaufelblatt mit Rissen.

Figur 3 zeigt den Schnitt durch das Schaufelblatt aus Figur 2 zusammen mit einem Keramikkern zum Einsetzen in einen Hohlraum im Schaufelblatt.

Figur 4 zeigt das Schaufelblatt aus Figur 3 mit in einen Hohlraum eingesetztem Keramikkern.

Figur 5 zeigt schematisch den Schweißvorgang zum reparieren des Risses im Schaufelblatt.

Figur 6 zeigt ein alternatives Schweißverfahren zum reparieren des Risses im Schaufelblatt.

Figur 7 zeigt das Schaufelblatt aus Figur 3 mit einer in einen Hohlraum eingestrichenen pastösen Keramikmasse.

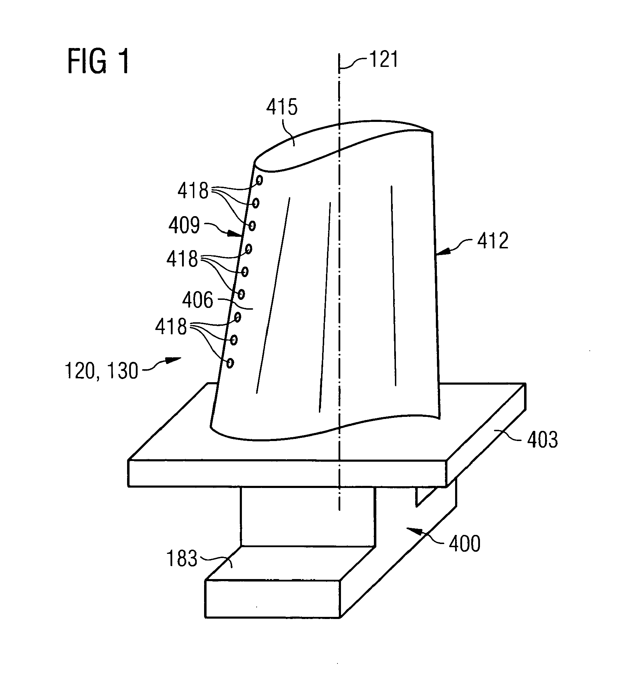

Die Figur 1 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAIX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAIX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

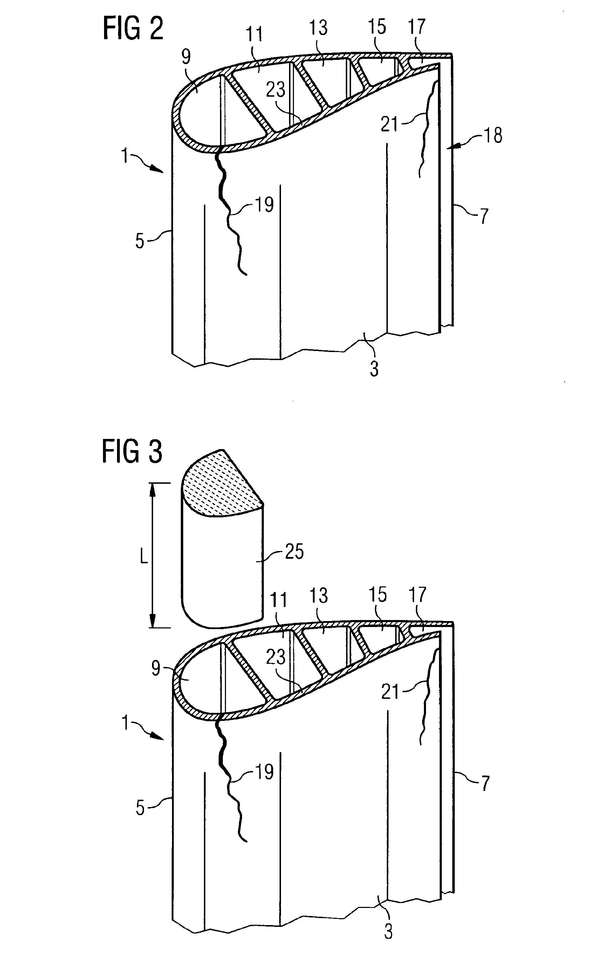

Figur 2 zeigt einen Schnitt durch das Schaufelblatt 3 einer Turbinenschaufel 1, der von der Anströmkante 5 zur Abströmkante 7 des Schaufelblattes 3 verläuft.

Es ist zu erkennen, dass die Turbinenschaufel 1 Hohlräume 9-17 aufweist, durch die ein Kühlfluid, bspw. Kühlluft, durch das Schaufelblatt 3 geleitet werden kann. Das Schaufelblatt 3 kann außerdem mit Filmkühlöffnungen versehen sein, wie sie in Figur 1 dargestellt sind. Der einfacheren Darstellung halber sind die Filmkühlöffnungen in Figur 2 nicht dargestellt. In der in Figur 2 dargestellten Turbinenschaufel 1 erstrecken sich die Hohlräume 9-17 in einer Richtung senkrecht zu Verbindung zwischen der Anströmkante 5 und der Abströmkante 7 durch das gesamte Schaufelblatt 3.

Das in Figur 2 dargestellte Schaufelblatt 3 weist auf Grund von Betriebsbeanspruchung Risse 19, 21 auf, die sich durch die Wand 23 des Schaufelblattes 3 erstrecken. Es sei an dieser Stelle angemerkt, dass beide Risse 19, 21 in der Figur übertrieben dargestellt sind.

Nachfolgend wird das Reparieren der Risse mittels Schweißverfahren im Rahmen eines Wiederaufarbeitungsprozesses für die Turbinenschaufel 1 beschrieben. Die im Rahmen des Wiederaufarbeitungsprozesses reparierte Turbinenschaufel kann dann erneute in einer Strömungsmaschine, bspw. einer Dampf- oder Gasturbinenanlage, zur Anwendung kommen.

Bevor der durch die Wand 23 des Schaufelblattes 3 verlaufende Riss 19 mittels eines Schweißverfahrens repariert wird, wird ein Keramikkern 25 in den Hohlraum 9 des Schaufelblattes 3 eingeführt. Der Keramikkern weist die negative Form des Hohlraumabschnittes, in den er eingeführt wird, auf.

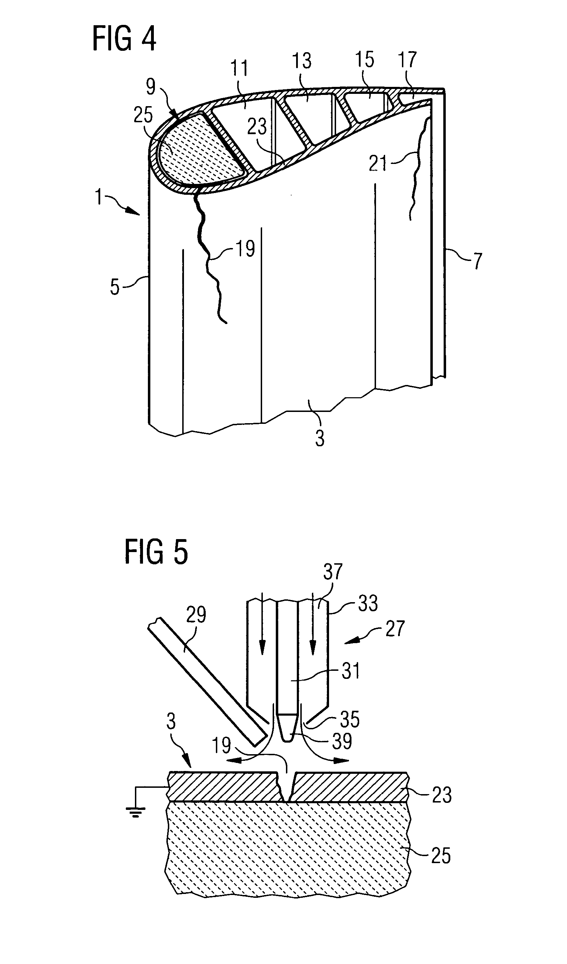

In Figur 3 ist der Keramikkern 25 zusammen mit dem Schaufelblatt 3 dargestellt. Der Keramikkern 25 ist in seiner Form und seinen Abmessungen so an die Form und die Abmessungen des Hohlraumes 9 angepasst, dass er genau in den Hohlraum 9 eingepasst werden kann. Seine Länge L ist mindestens so gewählt, dass sich der in das Schaufelblatt 3 eingesetzte Keramikkern 25 über den Bereich erstreckt, in dem der Riss 19 in der Wand 23 verläuft. Das Schaufelblatt 3 mit in dem Hohlraum 9 eingesetztem Keramikkern 25 ist in Figur 4 dargestellt. Als Keramikkern 25 kann insbesondere ein Teil eines Gießkernes zum Herstellen von Turbinenschaufeln wie der in den Figuren 2 bis 4 dargestellten Turbinenschaufel 1 Verwendung finden.

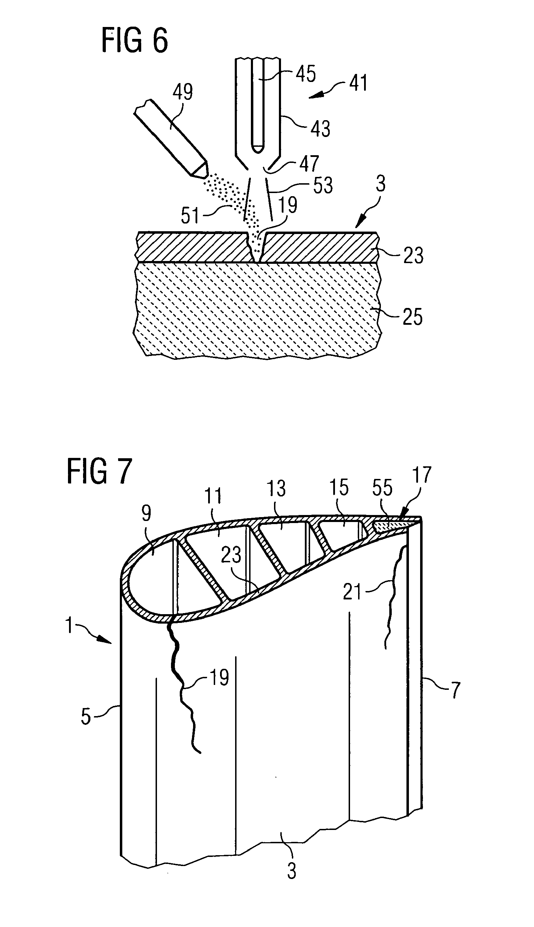

Nachdem der Keramikkern 25 in den Hohlraum 9 eingesetzt worden ist, erfolgt die Reparatur des Schaufelblattes 3 im Bereich des Risses 19 unter Zuhilfenahme eines Schweißverfahrens. Das Schweißverfahren ist stark schematisiert in Figur 5 dargestellt. Diese Figur zeigt einen Ausschnitt aus dem Schaufelblatt 3, in dem die Wand 23 des Schaufelblattes, der Keramikkern 25 und der Riss 19 in einer Draufsicht auf die Schnittebene aus den Figuren 2 bis 4 zu erkennen sind. Außerdem zu erkennen sind der Schweißkopf 27 einer Schweißvorrichtung sowie ein Draht 29, welche aus einem zum Basismaterial des Schaufelblattes 3 artgleichen Material besteht. Der Schweißkopf 27 ist zum Durchführen eines WIG-Schweißverfahrens ausgebildet. Das heißt, eine Schweißelektrode 31, die im vorliegenden Ausführungsbeispiel aus Wolfram besteht, ist von einem Gehäuse 33 umgeben. Das Gehäuse 33 weist eine Öffnung 35 auf, durch die sich die Wolframelektrode 31 teilweise hindurch erstreckt. Zwischen der Elektrode 31 und dem Gehäuse 33 ist ein ringförmiger Hohlraum 37 gebildet, durch den ein Inertgas, bspw. Stickstoff oder ein Edelgas, zur Öffnung 35 geleitet wird.

Das durch die Öffnung 35 austretende Inertgas bildet im Bereich der zu schweißenden Stelle einen Inertgasfilm über der Oberfläche der Wand 23 aus.

Zum Durchführen des Schweißprozesses wird die Turbinenschaufel elektrisch an Masse angeschlossen. Gleichzeitig wird an die Elektrode 31 eine so hohe Spannung angelegt, dass sich zwischen der Elektrodenspitze 39 und der Wand 23 des Schaufelblattes 3 ein Lichtbogen ausbildet, der im Bereich des Risses 19 zu einem Aufschmelzen einerseits der Wand 23 und andererseits der in diesem Bereich befindlichen Spitze des Drahtes 29 führt. Das Material 29 des Drahtes dient hierbei dazu, auf Grund von Verschleiß verloren gegangenes Material der Wand 23 zu ersetzen. Während des Schweißprozesses wird der Schweißkopf 27 entlang des Risses 19 verfahren, bis der gesamte Riss verschweißt ist. Nachdem der aufgeschmolzene Wandbereich und das im Bereich des Risses hinzugefügte Drahtmaterial wieder erstart sind, ist der Schweißvorgang beendet. Während des Schweißvorganges sorgt der Keramikkern 25 dafür, dass die Form der Wand 23 beim Schweißen stabil bleibt und dafür, dass kein Wandmaterial oder Drahtmaterial in den Hohlraum eintritt, falls der Riss 19 sich durch die gesamte Wandstärke der Wand 23 erstreckt.

Nachdem vollständigen Wiedererstarren des Wand- und des Drahtmaterials wird der Keramikkern 25 unter Verwendung eines Lösungsmittels, welches das Keramikmaterial auflöst, aber das Basismaterial der Wand 23 unangetastet lässt, wieder aus dem Hohlraum 9 entfernt. Als Lösungsmittel kann insbesondere Flusssäure (HF) Verwendung finden. Dieses Vorgehen zum Entfernen des Keramikkerns 25 bietet den Vorteil, dass auch aus kleinen Strukturen das Keramikmaterial 25 sicher entfernt werden kann.

Ein alternatives Schweißverfahren ist in Figur 6 dargestellt. Figur 6 zeigt ein so genanntes Plasmaschweißverfahren. In einem derartigen Schweißverfahren dient ein Plasmastrahl als Wärmequelle. Figur 6 zeigt in einer Darstellung, die der Darstellung in Figur 5 entspricht, einen Plasmaschweißbrenner 41, welcher eine als Anode ausgebildete Düse 43 und eine konzentrisch im inneren der Düse 43 angeordnete Elektrode 45 umfasst. Die Elektrode 45 ist im vorliegenden Ausführungsbeispiel als Wolframelektrode ausgebildet. Sie dient als Kathode des Schweißbrenners 41. Zwischen der Düse 43 und der Elektrode 45 ist ein Ringraum vorhanden, durch den ein Plasmagas, bspw. Argon oder ein anderes Edelgas, zur Öffnung 47 der Düse 43 geleitet wird. Bei Anlegen einer hohen Spannung zwischen der Elektrode 45 und der Düse 43 bildet sich ein Lichtbogen aus, der zu Ionisierung des Plasmagases führt. Das ionisierte Plasmagas tritt dann als Plasmastrahl 53 aus der Düsenöffnung 47 in Richtung auf den Riss 19 aus dem Schweißbrenner 41 aus. Über eine weitere Düse 49 wird ein Pulver aus einem zum Material der Wand 23 artgleichen Material in Richtung auf den Riss 19 in den Plasmastrahl 53 eingebracht. Dort schmilzt das Pulver 51 auf und kann Material im Bereich des Risses 19 ersetzen, welches auf Grund von Verschleiß verloren gegangen ist. Im Übrigen unterscheidet sich der Schweißprozess nicht weiter von dem mit Bezug auf Figur 5 beschriebenen Schweißprozess. Auch das Entfernen des Keramikkerns 25 erfolgt so, wie es mit Bezug auf Figur 5 beschrieben worden ist.

Auch der zweite in Figur 2 dargestellte Riss 21, welcher durch die Wand des Hohlraumes 17 verläuft, wird mittels eines Schweißverfahrens repariert. Als Schweißverfahren können grundsätzlich dieselben Schweißverfahren verwendet werden, wie sie mit Bezug auf das Reparieren des Risses 19 beschrieben worden sind.

Das Reparieren des Risses 21 unterscheidet sich vom Reparieren des Risses 19 durch das Einbringen des Keramikkernes. In den Hohlraum 17 wird kein vorgeformter formstabiler Keramikkern eingebracht, wie dies beim Hohlraum 9 der Fall war, sondern es wird eine Keramikpaste 55 in den Hohlraum 17 eingestrichen (vgl. Figur 7). Dies kann insbesondere durch eine im Bereich der Abströmkante parallel zu Abströmkante verlaufende Hohlraumöffnung 18 (vgl. Figur 2) erfolgen. Nach dem Einstreichen der pastösen Keramikmasse 55 wird diese mittels einer Wärmebehandlung gebrannt. Die gebrannte Keramikmasse 55 weist dann die notwendige Formstabilität auf, um die Wand 23 während des Schweißens sicher zu stabilisieren. Das Entfernen der Keramikmasse 55 erfolgt anschließend durch Auslaugen mit Hilfe eines geeigneten Lösungsmittels, bspw. Flusssäure.

Es sei an diese Stelle erwähnt, dass auch der formstabile Keramikkern 25, welcher in den Hohlraum 9 vor dem Schweißen des Risses 19 eingeführt wird, ebenfalls vor dem Schweißprozess einer Wärmebehandlung ausgesetzt werden kann. Dies bietet die Möglichkeit, den Keramikkern 25 als Grünling statt als gebrannten Keramikkern in den Hohlraum 9 einzuführen.

Das erfindungsgemäße Verfahren eignet sich insbesondere zur Verwendung im Rahmen eines Wiederaufarbeitungsprozesses für Turbinenschaufeln, etwa Lauf- oder Leitschaufeln von Gasturbinenanlagen oder Dampfturbinenanlagen. Insbesondere im Blattbereich und an Eintritt- bzw. Austrittskanten der Turbinenschaufel können dabei Wandstärken durch hinzugefügtes Material wieder aufgebaut werden. Das erfindungsgemäße Verfahren ist daher nicht allein auf das Reparieren von Rissen beschränkt. Es können jeder Art von Vertiefungen in der Wand repariert werden. Zum Abschluss der Reparatur kann das Turbinenbauteil optional qualitätssichernde Maßnahmen, etwa Röntgenprüfungen und Durchflussmessungen, durchlaufen.

Das erfindungsgemäße Verfahren ermöglicht es, Bauteile die bis heute zur Ausschuss erklärt werden mussten, bspw. weil Risse bis in den Schaufelinnenraum reichten, wieder aufzuarbeiten. Die bisher angewandten Verfahren, bspw. Einspaltlöten, decken dagegen Risse nur ab, ohne sie wirklich nachhaltig, d.h. über die gesamte Wandstärke, zu beseitigen.

## Patentansprüche

1. Verfahren zum Schweißen von Turbinenbauteilen (1) mit wenigstens einem Hohlraum (9-17) sowie einer an den Hohlraum (9-17) angrenzenden Bauteilwand (23), wobei das Schweißen an einer Schweißstelle (19, 21) in der Bauteilwand (23) stattfindet,
**dadurch gekennzeichnet,**
**dass** vor dem Schweißen ein keramischer Kern (22, 55) wenigstens dort in den Hohlraum (9, 17) eingeführt wird, wo sich die Schweißstelle (19, 21) in der Bauteilwand (23) befindet, und der keramische Kern (25, 55) nach dem Schweißen wieder entfernt wird.

2. Verfahren nach Anspruch 1,
**dadurch gekennzeichnet,**
**dass** als keramischer Kern (25) ein vorgeformter und an den Hohlraum (9) im Bereich der zu schweißenden Stelle (19) angepasster formstabiler Einsatz Verwendung findet.

3. Verfahren nach Anspruch 2,
**dadurch gekennzeichnet,**
**dass** als keramischer Kern (25) ein keramischer Gusskern oder ein Teil davon zur Anwendung kommt.

4. Verfahren nach Anspruch 1,
**dadurch gekennzeichnet,**
**dass** der keramische Kern (55) in Forme einer pastösen Masse in den Kohlraum (17) eingeführt wird.

5. Verfahren nach einem der vorangehenden Ansprüche,
**dadurch gekennzeichnet,**
**dass** der keramische Kern (25, 55) nach dem Einbringen in den Holraum (9, 17) gebrannt wird.

6. Verfahren nach einem der vorangehenden Ansprüche,
**dadurch gekennzeichnet,**
**dass** das Entfernen des keramischen Kernes (25, 55) durch Auslaugen erfolgt.

7. Verfahren nach Anspruch 6,
**dadurch gekennzeichnet,**
**dass** das Auslaugen unter Verwendung von Flusssäure als einem Lösungsmittel erfolgt.

8. Verfahren nach einem der vorangehenden Ansprüche,
**dadurch gekennzeichnet,**
**dass** beim Schweißen artgleicher Werkstoff (29, 51) zu der zu schweißenden Stelle (19, 21) zugeführt wird.

9. Verfahren nach Anspruch 8,
**dadurch gekennzeichnet,**
**dass** das Zuführen mittels eines zur zu schweißenden Stelle (19) geführten Drahtes (29) erfolgt.

10. Verfahren nach einem der vorangehenden Ansprüche,
**dadurch gekennzeichnet,**
**dass** als Schweißverfahren eine WIG-Schweißverfahren oder ein Plasma-Pulver-Schweißverfahren zum Einsatz kommt.

11. Verfahren nach einem der vorangehenden Ansprüche,
**dadurch gekennzeichnet,**
**dass** es im Rahmen eines Wiederaufarbeitungsprozesses für Turbinenbauteile (1) zum Einsatz kommt.
